# EUROPEAN PATENT APPLICATION

(11) **EP 1 967 979 A2**
(43) Date of publication of application: **10.09.2008**
(21) Application number: 08250805.2
(22) Date of filing: 10.03.2008
(51) Int. Cl.: G06F 21/02

(54) **Cryptographic key management for stored data**

(30) Priority: 09.03.2007 US 716271
(71) Applicant: Quantum Corporation, San Jose, CA 95110 (US)
(72) Inventor: Entzel, Paul G., Mead, Colorado 80542 (US); Ball, Matthew V., Broomfield, Colorado 80020 (US); Hellwege, Stephen A., Ladera Ranch California 92694 (US)
(74) Representative: Charig, Raymond Julian

(57) **Abstract**

A method is provided for performing application transparent key management in a storage library associated with an encrypting removable storage device. Encryption and decryption is performed by a key manager and the removable storage device, and is transparent to the application. Data is encrypted using keys that are managed by the storage key manager. An administrative interface allows an administrator to specify and manage encryption keys. A key identifier is associated with each key, and the key identifier is written to the tape along with the encrypted data. When reading encrypted data, the removable storage device reads the key identifier from the tape and requests the corresponding encryption key from the key manager. The removable storage device then provides the decrypted data to the application. The encryption key may be exported from the key manager or library in an encrypted XML format. Encrypted tapes can therefore be decrypted in different libraries by exporting the keys from one library to another.

## Description

### BACKGROUND OF THE INVENTION

### Field of the Invention:

The present invention relates generally to data encryption, and more specifically to techniques for encrypting data in mass storage devices.

### Description of the Related Art:

Data may be stored on a storage medium in an encrypted form to prevent unauthorized access to the data. In a typical encryption system, data is encrypted using another piece of data referred to as a key. The encrypted form of the data is essentially meaningless to anyone who does not have the key. That is, the key is typically required to decrypt the data stored on the storage medium to allow access the data in its original, i.e., unencrypted, form. The key is typically a secret that is only revealed to users who are authorized to access the data in its original form.

The process of encrypting and decrypting data stored on a storage medium can be managed and/or performed by backup applications, such as NetBackup^{™} from Symantec Corporation of Cupertino, California) or dedicated in-band appliances, such as Decru DataFort® from Network Appliance Inc. of Sunnyvale, California, or CryptoStor® from Neoscale Systems Inc. of Milpitas, California.

A cost-effective solution can advantageously be provided by an automated data storage library. A data storage automation library is a system for storing large quantities of data. A data storage automation library may receive data, e.g., from a host computer, and use a storage device such as a tape drive or disk drive to store the data on a storage medium, such as a magnetic tape, a magnetic disk, or an optical disk. An automation library may include multiple storage devices and an automated system for transferring storage media to and from the storage devices Upon receiving a request for stored data, the data storage automation library may retrieve the data from the storage medium and return the data to a host computer.

Users desire an easy-to-use, complete solution that provides data encryption and key management. To make this happen, it is necessary to provide a solution by coordination between the encrypting tape drive or removable storage device, the automation library, and back-up software application. However, back-up software applications often do not include features for encrypting and decrypting data stored on devices such as tape drives. Extending existing back-up software or providing new back-up software would require substantial effort and would potentially involve customizing the back-up software to operate with a particular vendor's automation library. Therefore, it would be desirable to provide for storage of encrypted data in an automation library independent of the backup software application.

### BRIEF SUMMARY OF THE INVENTION

In general, in a first aspect, the invention features a storage medium. The storage medium includes a magnetically encoded key identifier for identifying an encryption key, and the key identifier includes a device identifier that identifies the origin of the key, a timestamp; and a key nonce. Embodiments of the invention may include one or more of the following features. The timestamp may represent the time at which the encryption key was created. The timestamp may represent the time at which the encryption key was made available. The key nonce may be based upon a pseudo-random value. The storage medium may include magnetic tape, magnetic disk, optical storage, or a combination thereof. The key nonce may be based on random number created by a physical entropy source. The key nonce may include a unique number within the domain of a storage device associated with the key.

In general, in a second aspect, the invention features an apparatus for encoding a key identifier on a magnetic tape. The apparatus includes logic for causing a device identifier to be magnetically encoded on the tape, logic for causing a timestamp to be magnetically encoded on the tape, and logic for causing a key nonce to be magnetically encoded on the tape.

In general, in a third aspect, the invention features key manager apparatus for providing a decryption key. The key manager apparatus includes logic for requesting from a storage device a key identifier that identifies a received decryption key, logic for causing the retrieval of an entry from a table of at least one encryption key, wherein the entry is associated with a key identifier received from the storage device, and the entry specifies the decryption key that corresponds to the encrypted data, and logic for causing the decryption key to be communicated to the storage device. Embodiments of the invention may include one or more of the following features. A data storage library may include the key manager apparatus.

In general, in a fourth aspect, the invention features a data storage device operable to decrypt encrypted data stored on a storage device. The storage device includes logic for detecting the encrypted data and a key identifier associated with the encrypted data stored on the storage device, logic for causing a request for a decryption key to be communicated to a data storage library, wherein the request includes the key identifier, and logic for causing decryption of the encrypted data block with a received decryption key to produce decrypted data.

Embodiments of the invention may include one or more of the following features. The data storage device may include logic for configuring the storage device to use the decryption key to decrypt data associated with the key identifier, and logic for causing the decrypted data to be communicated to a host. The data storage device may include a magnetic tape drive, a magnetic disk drive, an optical disk drive, or a combination thereof.

In general, in a fifth aspect, the invention features key manager apparatus for providing an encryption key. The key manager apparatus includes logic for generating an encryption key and an associated key identifier in response to receiving a request for an encryption key, and logic for causing the encryption key and the associated key identifier to be communicated to the storage device. Embodiments of the invention may include one or more of the following features. A data storage library may include the key manager apparatus.

In general in a sixth aspect, the invention features a data storage device operable to encrypt data to be stored on the storage device. The storage device includes logic for causing a request for an encryption key to be communicated to a data storage library in response to receiving a write data command, logic for configuring the storage device to encrypt and decrypt data with an encryption key received from the library, logic for causing encryption of the data with the encryption key, and logic for writing the data and a key identifier associated with the encryption key to the storage device, wherein the key identifier is received from the library, and the key identifier is stored in association with the data. Embodiments of the invention may include one or more of the following features. The data storage device may include a magnetic tape drive, a magnetic disk drive, an optical disk drive, or a combination thereof.

In general, in seventh aspect, the invention features key export apparatus for generating a tree-structured representation of an encryption key. The apparatus includes logic for generating at least one key data tree element, wherein the key data tree element includes a key name and an encrypted representation of the encryption key. Embodiments of the invention may include one or more of the following features. The tree-structured representation may include an XML representation. The key data tree element may include a key creation date, a key expiration date, a key creation name, address, and authority identifier, a key handle, or a combination thereof.

### BRIEF DESCRIPTION OF THE DRAWINGS

**Figure 1** is an illustrative drawing of backup system that uses library-based key management in accordance with embodiments of the invention.

**Figure 2** is an illustrative drawing of a key identifier data format in accordance with embodiments of the invention.

**Figure 3** is an illustrative drawing of an automation key management control format in accordance with embodiments of the invention.

**Figure 4** is an illustrative drawing of an encryption status log parameter data format in accordance with embodiments of the invention.

**Figure 5** is an illustrative flow diagram of key management logic for decrypting data in a library in accordance with embodiments of the invention.

**Figure 6** is an illustrative drawing of decryption logic for decrypting encrypted data stored on a storage device in accordance with embodiments of the invention.

**Figure 7** is an illustrative drawing of key management logic for encrypting data in a library in accordance with embodiments of the invention.

**Figure 8** is an illustrative drawing of encryption logic for encrypting data to be stored on a storage device in accordance with embodiments of the invention.

**Figure 9** is an illustrative drawing of an exemplary computer system that may be used in accordance with some embodiments of the invention.

### DETAILED DESCRIPTION OF THE INVENTION

The following description is presented to enable a person of ordinary skill in the art to make and use the invention, and is provided in the context of particular applications and their requirements. Various modifications to the embodiments will be readily apparent to those skilled in the art, and the generic principles defined herein may be applied to other embodiments and applications without departing from the spirit and scope of the invention. Moreover, in the following description, numerous details are set forth for the purpose of explanation. However, one of ordinary skill in the art will realize that the invention might be practiced without the use of these specific details. In other instances, well-known structures and devices are shown in block diagram form in order not to obscure the description of the invention with unnecessary detail. Thus, the present invention is not intended to be limited to the embodiments shown, but is to be accorded the widest scope consistent with the principles and features disclosed herein.

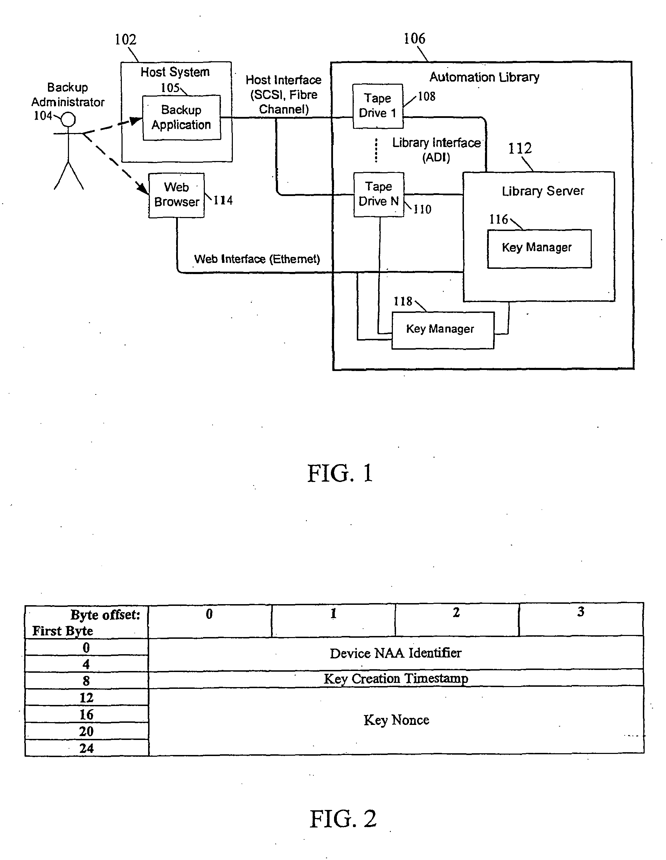

**Figure 1** is an illustrative drawing of backup system that uses library-based key management in accordance with embodiments of the invention. In the example configuration shown in **Figure 1**, a library-based key management system includes a backup administrator 104, a host system 102, a backup application 105, an automation library 106, and a host interface between the host system 102 and the automation library 106. The automation library 106 includes a library server 112, one or more storage devices, such as a removable storage device 108, an optional removable storage device N110, key managers 116, 118 (only one of the key managers 116, 118 is typically present), and a library interface between the removable storage device(s) 108 (and 110) and the library server 112 or the key manager 118. The removable storage devices may be magnetic tape drives, optical drives, disk drives, flash-memory based drives, or other storage devices with removable storage media. If the key manager 118 is not resident on the library, keys may still be cached on the library to improve performance. In another example, when the key manager 118 is resident on the library, the keys may be stored outside of the library, e.g., in an external storage device. In another example, keys may be stored in an external storage device, and secondary copies of the keys may be stored on the library. The keys may be stored on more than one external repository, e.g., for redundancy or improved availability. A web browser 114 interacts with the library server 112 (and the key manager 118, if it is present) via a web interface. The backup administrator 104 may be a person that coordinates activities involved with a backup operation. The administrator 104 may be responsible for starting the backup application and providing the appropriate security credentials to the library server. The host system 102 may be, for example, a computer system that executes the backup application. The backup application 105 may be, for example, a software application that can perform a data backup and recovery operation.

The host interface may be, for example, a communication link or connection between the backup application 105 and removable storage device 108. Example of the host interface include SCSI, iSCSI, Fibre Channel, and SAS (Serial Attached SCSI). Note the host interface may be part of a SAN (Storage Area Network). The removable storage device 108 may be connected to the backup application 105 via the host interface, and to the library server 112 via the library interface. The library server 112 may be, in one example, a server capable of communicating with the removable storage device(s) 108 (and 110) via the library interface, and with the backup administrator 104 via the web interface. The library server may be a computer, or may be a process running on a computer. A key manager 116 runs on the library server. In one example, the key manager 116 is an application or process implemented by computer program code and running on the library server 112 (or on a computer that hosts the library server 112, if the library server 112 is a process). The key manager 116 may store encryption keys on the library server or elsewhere. In another example, the key manager 116 is not running on the library server. Instead, a key manager 118 is running outside the library server 112, e.g., on a different computer than the library server 112, or in a different process than the library server 112. Two key managers 116, 118 are shown for illustrative purposes; one key manager is typically present. The key manager 116 or key manager 118 may run on any computer that communicates with the removable storage devices 108, 110, with the library server 112, and with the web browser 114.

The library interface may be, in one example, a communications link between the removable storage device(s) 108 (and 110) and library server 112 within the automation library 106. The removable storage device(s) 108 (and 110) may be produced by Quantum® Corporation, for example, and may use the ADI interface. The automation library 106 may be, for example, a hardware device that contains one or more removable storage devices 108, one or more tape cartridges (not shown), and the library server 112. The automation library 106 may be capable of moving tape cartridges into and out of the removable storage devices 108 using mechanical automation. The web interface may be used for allowing the backup administrator 104 to communicate to the library server 112 via a network connection such as TCP/IP over Ethernet. The web browser 114 may be, for example, a software application (such as Internet Explorer^{™}, Netscape^{™}, or Firefox^{™}) that can provide a user interface for communication between the backup administrator 104 and the library server 112. In one example, encryption keys are securely stored in the automation library 106. The administrator 104 may log into the library 106 through the web browser 114 to activate the keys.

In one example, no action is required by the backup application when data stored on the removable storage device(s) 108 is stored in encrypted form. Therefore, this library-based key management approach is not dependant on the backup application 105 or on the vendor of the backup application 105. The backup administrator 104 may configure the tape drive 108 via the library 112 by using the web browser 114 to issue configuration commands to the library 112. The library then configures the tape drive 108 in accordance with the configuration commands. The removable storage device 108 or the key manager 116 may generate new encryption keys and associates keys with key identifiers.

A data backup operation may be performed according to the following steps. The backup administrator 104 logs into the key manager 116 using the web interface. The backup administrator 104 configures the key manager 116 to encrypt all data written to one or more selected removable storage devices. Subsequently, the data written to the removable storage device(s) identified by the administrator 104 will be encrypted using an encryption key. The key manager 116 may generate a new key or reuse existing keys. In either case, the key manager 116 sends the key and key identifier to the removable storage device. The backup administrator 104 starts the backup application to perform a data backup operation. The removable storage device encrypts the data from the backup application using the key provided by the key manager 116.

In one example, a data recovery operation may be performed according to the following steps. A special administrator user account is provided for creating and assigning encryption keys to storage devices through the remote web browser 114. The authorization is enforced through a password. In one example, only this special user has access to key management features such as authorizing a removable storage device to have access to an encryption key. The backup administrator 104 logs into the library 112 or key manager 116 (or key manager 118 if present; all references to key manager 116 herein refer to either key manager 116 or key manager 118) using the web interface and authorizes selected storage devices to access to selected encryption keys. The backup administrator 104 starts the backup application to perform a data recovery operation. When the storage device 108 encounters encrypted data, the storage device 108 sends an indication that encrypted data has been encountered to the key manager 116. The key manager requests the key identifier from the storage device 108. The storage device 108 then sends the key identifier that corresponds to the encrypted data to the key manager 116, and requests the corresponding key. The key identifier may be represented as or stored on a storage medium in AKAD or UKAD format, according to T10/SSC-3. The details of storing a key identifier on a particular storage medium are device-dependent. If the removable storage device is authorized to receive the requested key, the key manager 116 sends the appropriate key to the removable storage device. Otherwise, the key manager 116 logs an error message and does not send the key to the removable storage device. In one example, the authorization is granted by the administrator, as described above. If the removable storage device receives the correct key for the data, then the removable storage device decrypts the data and sends the data to the backup application. Otherwise, the removable storage device reports an error according to, for example, the T10/SSC-3 specification. Library-based key management may be implemented as an extension of an existing data storage system by extending the library server 112 (e.g., by adding the key manager 116), the storage device, e.g., a removable storage device 110, and the communication protocol between the storage device and the key manager 116.

In one example, an automation library may be extended to support library based key management as follows. The creation of new keys may be provided by a cryptographically secure random number generator. Optionally, the removable storage device may create new keys, or may create the random numbers used to generate new keys if the key manager 116 or library server 112 lacks a suitable entropy source for generating random numbers. The key manager 116 may store some number of keys and associated metadata. The encryption algorithm for encrypting keys may be NIST AES Key-Wrap. Metadata may be stored with each key, as described below. A root key may be maintained for encrypting the keys. The root key may contain at least 256 bits of random data, or may be derived from a secure password. In one example, the random data is derived entirely from a cryptographically secure random number generator.

A method for securely exporting keys from the key manager 116 is provided, as is a method for an authorized user to retrieve the root key from the key manager 116 for back-up purposes, or to enter an existing root key for recovery purposes. A method for setting encryption keys within the removable storage devices may be supported.

An encryption interface may be provided to the backup administrator. The encryption interface will allow the administrator to define rules for the frequency of creating new keys (e.g. daily, weekly, monthly, user-specified), and scope (e.g. same key for all drives, different keys per drive). The key assignment may be a manual process in which the administrator logs into the library to change the encryption key. The encryption key may be selectable for each drive, with an option to set all drives to the same key. In one example, the removable storage device remains in the proper encryption mode with the proper key while data is to be encrypted or decrypted. This feature may be implemented by detecting drive resets, media changes, and any other event that could disable the encryption mode, and preventing those events from disabling the encryption mode. In one example, the library prevents the removable storage device from writing unencrypted data when the library expects the data to be encrypted.

In one example, a storage device, such as a removable storage device, may be extended to support library-based key management as follows. Encryption keys may be received from the key manager 116 through the communication protocol interface between the storage device and the library. A lock-out mode may optionally be provided in which the removable storage device only receives encryption-related commands from the key manager 116 through the communication protocol interface with the key manager 116. This restriction may be imposed to prevent the backup application from interfering with library-based key management. Alternatively, the removable storage device may notify the library if the backup application attempts to perform encryption operations while the library is performing key management. A key identifier may be sent to the key manager 116, with the purpose of receiving the corresponding key from the key manager 116. In one example, an existing communication protocol between a data storage device and a library server may be extended to support library-based key management by adding new communication protocol commands to the protocol as described herein. An example of such an existing protocol is the ADC protocol used by Quantum® Corporation. The SSC-3 SECURITY PROTOCOL IN and SECURITY PROTOCOL OUT commands may be supported, and a method may be provided for the key manager 116 to lock down the encryption mode on the removable storage device, so that the removable storage device rejects any commands from the backup application that attempt to affect the encryption and decryption process, and accepts such commands received on the ADI interface.

A method may be provided for the removable storage device to send the key identifier to the key manager 116 and receive the corresponding key from the key manager 116. To do that, the key manager 116 may periodically poll the removable storage device, or the key manager 116 may establish a Logical Unit Number (LUN, i.e., device number) to which the removable storage device may send requests for keys.

In one example, key management may be performed by a backup application instead of by the library. For example, the backup application may use the T10/SSC-3 SECURITY PROTOCOL commands to perform key management. If the backup application is to perform key management, the backup administrator may not enable any of the key management features of the library.

In one example, a universal key identifier format is defined for representing encryption keys. An encryption key represented in the key identifier format may be stored on a magnetic tape or sent via a communication network. The key identifier format is suitable for use between different vendors. In one example, each key identifier has a high probability of being universally unique, which is a property that greatly simplifies key management. Furthermore, each key identifier contains enough metadata to help identify the specific origin of the key. The metadata may be used to retrieve the key.

**Figure 2** is an illustrative drawing of a key identifier format in accordance with embodiments of the invention. The key identifier format includes a globally-unique device identifier, such as an NAA, IEE OUI or EUI-64 (see T10/SPC-4), a key creation timestamp, and a key nonce. The first four bits (first nibble) of the NAA identifies the type. In one example, the following formats are supported:

| **Code** | **Description** |
|---|---|
| 0h | Reserved |
| 1h | IEEE Standard |
| 2h | IEEE Extended |
| 3h - 4h | Reserved |
| 5h | IEEE Registered Extended |
| 6h - Fh | Reserved |

In T10/SPC-4, the device server (e.g., a storage device such as a removable storage device) typically reports the NAA identifier as a type-3 designator in the Device Identification VPD page (See T10/SPC-4 rev 6 or later). The NAA number also includes an IEEE OUI. The IEEE OUI (Institute of Electrical and Electronics Engineers Organizationally Unique Identifier) is a 3-byte value that uniquely identifies every vendor. For example, IEEE has assigned the value 00E09Eh to Quantum® Corporation.

In one example, the key creation timestamp may be a 4-byte value that either contains the time when the key was created, or the first time that the key is available. If the library pre-generates a set of keys, then the creation timestamp of each key may be its scheduled availability date instead of the creation date of the batch. For example, if a library creates 30 keys for each day of the next month, then each key may have a creation date corresponding to each day. The library may optionally choose a random time during the day so that there is a lower probability of duplicate timestamps between key identifiers of different key generators.

In one example, the key nonce may be a 16-byte random number used to identify a particular key. When the library generates a new key, the library may also generate a random 16-byte value as a key nonce. Alternatively, the library may create a key nonce seed during initialization and use this seed to create new key nonce values by incrementing the nonce seed each time a new key nonce is needed. The library may ensure that it never accidentally generates the same key nonce twice.

When generating the key nonce or key nonce seed, the library may use a cryptographically secure random number generator. For this purpose, it is possible to request cryptographically secure random numbers from the removable storage device and use these random numbers to seed an internal cryptographically secure random number generator. By using a 16-byte random number, each key nonce has a high-probability of being globally unique.

The probability of two 16-byte random nonce values having the same value is 1 in 2¹²⁸, or about 1 in 10³⁸. However, an important limit is the so-called 'birthday bounds' (named after the birthday paradox). For a 128-bit number, a duplicate nonce becomes probable after about 2⁶⁴ independent numbers. As long as the library generates significantly fewer than 2⁶⁴ key nonce values, then the probability of a collision (i.e. duplicate value) is acceptably low.

In one example, the key identifier is stored on the storage media with the data. The removable storage device may store the key identifier in association with the encrypted data by storing the key identifier within any combination of AKAD (authenticated key associated data) or UKAD (unauthenticated key associated data) within the encrypted record. AKAD and UKAD may be stored with each data record on the storage medium. For example, the AKAD may immediately precede the encrypted data record. For example, the encrypting DLT-S4 removable storage device supports up to 32 bytes of AKAD, which is enough space to hold the entire key ID. In some storage devices, there may be a definition for 16 bytes of UKAD. In this case, the library may store the first 12 bytes of the key ID within the AKAD, and the last 16 bytes (i.e. key nonce) within the UKAD. The library may use the T10/SSC-3 (version 3 or higher) SECURITY PROTOCOL command for sending AKAD and UKAD to the removable storage device.

In one example, the key identifier may be represented in an Extensible Markup Language format (XML). This XML key format is typically used for exporting the key identifier from the library, so that other systems or applications may use the key identifier. The XML key-export format is an extension of the XML-ENC format specified by the World Wide Web Consortium (W3C) with custom definitions. The export format may be described by an XML Document Type Definition (DTD). A DTD is a formal description of the format of an XML document, and is essentially a schema for XML documents. The DTD for the key identifier format is included in Appendix A. An example XML format key is shown in Appendix B.

The first element of the DTD specifies the overall structure of a key identifier XML document by listing the elements (i.e., XML nodes) that may appear in the XML document:
<!ELEMENT KeyBackup (Version, DevInfo?, ExportInfo?, KeyData+, OptionalParameters?, Signature?)>

According to the above element specification, a key identifier includes a Version element followed by an optional DevInfo element, an optional ExportInfo element, one or more KeyData elements, an optional OptionalParameters element, and an optional Signature element.

The version field, VersionNum, contains information about the format of the XML data. The version number 1 corresponds to the format described herein. Comment is an optional field describing this format. A possible value is "Quantum Key Export Format." The DevInfo element is optional. If present, it may contain the following elements (all of which are optional except DevNAA). DevType (optional): The type of device that is exporting this key file. For example, "Library". DevSerialNum (optional): The serial number of the device, in a vendor-specific string. DevModel (optional): The device model for the exporting device. DevName (optional): The user-assigned device name. Example: "My Library." DevNAA: The 8-byte NAA value of the device, expressed in hexadecimal.

The ExportInfo element includes an ExportTime element and an optional ExportUser element. ExportTime represents the time at which this key was exported. Example: 200609051855z (for 9/6/06 at 6:55 pm, GMT). ExportUser represents the name of the user who performed the export operation.

The KeyData element includes a KeyName element, a KeyCreationDate element, an optional KeyExpirationDate element, a KeyCreationNAA element, a KeyHandle element, an optional Mediald element, and an EncryptionKey element. The KeyName element may be a text string that describes the encryption key. The KeyCreationDate is a representation of the date at which the key was created or scheduled for use. The KeyCreationDate is represented in a GeneralizedTime format, which is described below. The key may not be used before the creation date. KeyExpirationDate is a GeneralizedTime representation of the expiration date of the key. The key may not be used after the expiration date and may be destroyed after the expiration date. KeyCreationNAA specifies the NAA of the device that originally created this key, in hexadecimal format. KeyHandle is a unique identifier for this key, within the context of the device that created the key, in Base64 format. MediaId is a list of zero or more barcodes (or other media identification values) of cartridges that contain data encrypted with this key. EncryptionKey is the raw data for the encryption key. The EncryptionKey may be wrapped using the XML-Enc format with the NIST AES key-wrap algorithm.

The OptionalParameters element may represent optional data, and provides for future extension of the key format. The Signature element is an optional digital signature that protects all the previous fields within the KeyBackup element. To create the digital signature, the importing device creates a canonical form of the XML data in the previous sections, according to RFC 3076 (Canonical XML Version 1.0), then passes the canonical XML data through a digital signature algorithm.

Any field of type "GeneralizedTime" has a standard format for expressing a date and time. The format is YYYYMMDDHHMMSSz, where YYYY is the 4 digit year, MM is the 2 digit month, DD is the 2 digit day, HHis the 2 digit hour, expressed in 24-hour notation, MM is the 2 digit minute, SS is the 2 digit second, and 'z' indicates that the time is expressed relative to Greenwich Mean Time (GMT). The value of any unused field may be set to zero.

In one example, a root key is used to encrypt keys exported from the library. In one example, the root key may be a 256-bit random value stored on one or more smart cards. In another example, a user-password may be used to create the root key. In the user password case, the library may hash the user-password to create the root key using a hashing algorithm such as the SHA-256 cryptographic hashing algorithm. The root password may have at least 8 characters, with at least one character taken from the following groups: lowercase letters, uppercase letters, numbers, special symbols. The library may also allow a user defined name to be associated with the root key, and may save the creation timestamp of the root key.

A root key handle (nonce) is to be created when the root key is created or changed. This handle is a 16-byte random value. It is used to differentiate key files encrypted with the root key associated with the nonce from files encrypted with a different root key.

In one example, keys may be backed up and restored in an automated fashion. For example, keys may be backed up to and restored from a server that is external to the library, such as a File Transfer Protocol (FTP) server. Automated key backup and restore may be accomplished as follows:

The library GUI may allow fields to specify the IP/directory/username/password of FTP server(s) designated for key backup. Multiple FTP servers may be defined for redundancy. Each key will typically be stored in a separate file. The filename format will be "User_Key_Name.Universal_Key_Id.Root_Key_Handle", and the file's internal format will be the XML key backup format described herein. When a key is created, it may be written to the library's local key storage, and to the key backup FTP server(s). In one example, if the library cannot connect to the key backup FTP server(s), the key creation operation will fail.

When a drive needs to decrypt a tape, the drive requests the key from the library and passes the Universal Key Id to it. The library will check its local storage first. If the key is not found, the library will attempt to retrieve the key from the key backup FTP server(s). If the key is found on an FTP server, the library will update its local storage with the FTP server(s) key, and send the key on to the drive. If the key is not found in the library's local storage or on the FTP server(s), the library will log a critical event. Initially, there will be no user based key access rules, i.e. all keys will be available to any drive for decryption.

To move keys from another library's backup key storage, a user may copy the key files into the ftp server directory. In a graphical user interface (GUI), there will be two buttons used to import key files. One button causes import of key files individually, and another button causes import of key files by group. For the individual key import, the library will list all keys available for import that are not present in its local database (removing any duplicates). For the group key import, the library will list all key groups that are available for import. Those keys that have the same Root-Key_Handle are considered part of the same group.

When an individual key or group is selected for import, the library will query or prompt for the root key password that was used to create the selected key or group. The import process will read each key or key in group selected for import, decrypt the key against the root key password given, and re-encrypt the key against the current library root key. The library will copy this imported key to its local key storage and to a new key file. When finished, the GUI will tell the user how many keys were imported.

In one example, if the root key changes, the library will re-encrypt all of its local keys with the new root key, and re-encrypt and save all of the backup key files with the new root key. When the library local key storage is full and a new key is requested for creation, the library will purge the oldest 100 keys that are not associated with any tapes currently in the library. If the FTP server(s) storage is full, key creation will not be allowed, and a critical event will be generated. In one example, the library will not overwrite any key files on the FTP server(s). The key filename format has been designed to prevent such overwriting. However, if a filename conflict occurs, the library may rename the old key file before writing the new one.

When deleting a key using the GUI, the library will remove the key from its local key storage, and provide the filename of the key to the user so that the user can manually remove the key from the FTP server(s) if desired.

If the FTP server address (e.g., IP or Internet address) changes, the library will write any keys that are present in its local database that are not present on the FTP server to the FTP server. This action ensures that a backup copy of each key resides outside of the library's local storage.

In one example, the SCSI commands and data in the communication protocol employed between the library and the removable storage device may be changed to allow the library to control the encryption and decryption process in an encryption-capable removable storage device. In this example, the communication protocol is the ADT transport layer protocol used by Quantum® Corporation.

There are several distinct use cases for an encryption removable storage device. In one embodiment, the backup application is not aware of encryption in the drive and makes no attempt to control it. There are typically no other applications accessing the drive over the primary interface attempting to control encryption for the backup application. In another embodiment, the backup application is not aware of encryption in the drive and makes no attempt to control it. There is another application with access to the drive over the primary interface that may or may not attempt to control encryption for the backup application. In a third case, the backup application is aware of encryption in the drive and will control it. In a fourth case, the backup application is aware of encryption in the drive and wishes to direct a third party to control it. In a fifth case, the current version of the backup application is aware of encryption and wants to control it, but the tape has backup sets on it from a previous version of the backup application and encryption was controlled on those backup sets by the library (mixed control).

In one example, a removable storage device is configured to request keys as needed from the library. That is, the library configures key management control in the removable storage device so that the removable storage device accepts keys from the library according to a policy that can be selected by the library. The acceptance policies from which the library can choose include: (a) the removable storage device will only accept encryption keys from the library, (b) the removable storage device will use encryption keys from the library for initiators that do not configure encryption for themselves, (c) the removable storage device may also use encryption keys from the library unless a primary port initiator over-rides them, and (d) the removable storage device will not expect encryption keys from the library.

The library may configure the removable storage device so that the removable storage device will report to the library an encrypted block has been encountered when reading and the drive needs a decryption key or decryption mode change form the library to read it. The removable storage device may also be able to report an unencrypted block has been encountered when reading and the drive needs a decryption mode change from the library. The removable storage device may also be able to report the encryption key or mode has been lost due to another initiator changing it, and, when appropriate, that the encryption key or mode has been lost due to some other event.

The library may be able set the ALL I_T NEXUS scope encryption mode, decryption mode, key and KAD (either AKAD, UKAD, or both). When configured to get encryption keys from the library, the removable storage device may notify the library and wait for instructions when (a) the encryption key or mode is lost and the LOCK bit was set by the library when it set it last, or (b) the drive transitions from read mode or position mode into write mode (so the library can set the encryption key after the key needed to read was being used), or (c) while reading with the library in control of encryption, a record is encountered with the wrong key or mode, or (d) when a primary port initiator takes control of the encryption process.

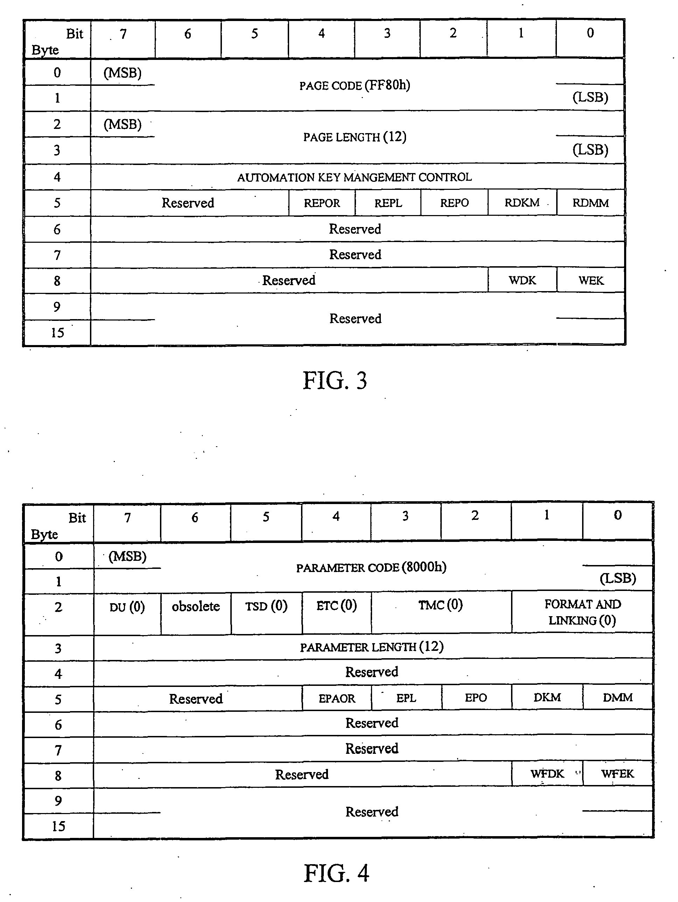

**Figure 3** is an illustrative drawing of an automated encryption control page in accordance with embodiments of the invention. To enable the library to configure the drive encryption process, a new page referred to as the Automation Encryption Control page is added to security protocol. In one example, the Automation Encryption Control page is only supported in ADC device servers. In one example, the security protocol includes a SECURITY PROTOCOL OUT command with an automation encryption control page. The removable storage device may support the SECURITY PROTOCOL IN and SECURITY PROTOCOL OUT commands in the ADC device server, including support for the Tape Data Encryption protocol. ADC is a T10 standard that defines commands, parameter data, and status for communications between an automation device and a removable storage device in a library. T10 is a Technical Committee of the InterNational Committee on Information Technology Standards (INCITS).

The AUTOMATION KEY MANGEMENT CONTROL field at byte 4 indicates to the drive the level of involvement to expect from the library with regards to encryption: The possible values of the automation key management control field may are described in the following table.

| Code | Description |
|---|---|
| 00h | The library will not be involved. |
| 01h | The library will set the encryption parameters with a scope value of ALL I_T NEXUS to be used for all initiators that do not configure encryption for themselves. The ALL I_T NEXUS parameters may be over-ridden by an initiator on the primary interface. |
| 02h | The library will set the encryption parameters with a scope value of ALL I_T NEXUS to be used for all initiators that do not configure encryption for themselves. The ALL I_T NEXUS parameters may NOT be over-ridden by an initiator on the primary interface. |
| 03h | The library will set the encryption parameters with a scope value of ALL I_T NEXUS to be used for all initiators. The parameters may NOT be over-ridden by an initiator on the primary interface. |
| 04h - FFh | Reserved |

The report decryption mode mismatch (RDMM) bit set to one indicates the device server, e.g., removable storage device, may set the RRQST bit in a Very High Frequency (VHF) data packet to one if the decryption process has detected an encrypted block while reading with decryption mode disabled. In one example, the VHF data packet is a packet of data that contains dynamic information about the removable storage device state that the library is most interested in. This packet of data can be accessed quickly and easily by the library through a rapid polling method provided in the ADT standard. The library may configure the removable storage device to send a VHF packet to library whenever a field value in the packet changes as an alternative to the polling model. In some cases the VHF data contains an indicator specifying that further detailed information is available for access through other SCSI commands. The bits RRQST and other bits described herein are examples of such indicators.

The report decryption key mismatch (RDKM) bit set to one indicates the device server may set the RRQST bit in the VHF data to one if the decryption process has detected a block encrypted with a different key while reading with decryption mode enabled.

The report encryption parameters over-ridden (REPO) bit set to one indicates the device server may set the RRQST bit in the VHF data to one if an initiator has over-ridden the ALL I_T NEXUS scope data encryption parameters over a primary interface port.

The report encryption parameters lost (REPL) bit set to one indicates the device server may set the RRQST bit in the VHF data to one if a clearing event has caused the data encryption parameters set by the automation device to be cleared.

The report encryption parameters over-ride rejected (REPOR) bit set to one indicates the device server may set the RRQST bit in the VHF data to one if an attempt by an initiator to over-ride the ALL I_T NEXUS scope data encryption parameters over a primary interface port has been rejected due to the configuration.

If the wait for encryption key (WEK) bit is set to one the device server may pause when transitioning into write mode and request a new encryption mode from the library. The new encryption mode is requested by setting the WFEK bit in the Encryption Status log parameter of the Requested Recovery log page and the RRQST bit in the VHF data. The device server may not process any write data until: (1) the ADC device server processes a SECURITY PROTOCOL OUT command with a Set Data Encryption page; (2) the ADC device server processes a SECURITY PROTOCOL OUT command with an Automation Encryption Control page that has the WEK bit set to 0; or (3) a vendor-specific timeout occurs without one of the other events occurring.

If the wait for decryption key (WDK) bit is set to one the device server may pause if it detects a decryption mode mismatch or incorrect key while reading and request a new decryption mode from the library. The new decryption mode is requested by setting the WFDK bit in the Encryption Status log parameter of the Requested Recovery log page and the RRQST bit in the VHF data. The device server may not return error status to the primary port indicating the decryption problem until: (1) the ADC device server processes a SECURITY PROTOCOL OUT command with a Set Data Encryption page; (2) the ADC device server processes a SECURITY PROTOCOL OUT command with an Automation Encryption Control page that has the WDK bit set to 0; or (3) a vendor-specific timeout occurs without one of the other events occurring.

The VHF data already provides a standard method for reporting exceptions in the Requested Recovery (RRQST) bit. This bit is set when a recovery operation is waiting to be read from the drive via the Requested Recovery log page. Since that is the log page to which the exception reports will be added, this bit is perfect. The RRQST bit in the VHF data is set by the device server when an event has occurred for which the library has requested a report.

**Figure 4** is an illustrative drawing of an encryption status log parameter in accordance with embodiments of the invention. The Encryption Status log parameter is present in the Requested Recovery log page in the vendor unique space. In one example, reading this parameter clears the RRQST bit in the VHF data even if bits remain set in the parameter after it is read.

The decryption mode mismatch (DMM) bit at bit 0 of byte 5 may be set to one while reading if the storage device has detected an encrypted block at the encryption engine and decryption is disabled (i.e., decryption mode is set to DISABLED), or the drive has detected an unencrypted block at the encryption engine and decryption is enabled (i.e., decryption mode is set to DECRYPT). The DMM bit is not set if the decryption mode is set to MIXED. This bit remains set to one as long as the condition exists regardless of the setting of the RDMM bit in the Automation Encryption Control page.

The decryption key mismatch (DKM) bit at bit 1 of byte 5 may be set to one while reading if drive has detected an encrypted block at the encryption engine and the current encryption key is incorrect for the block. It is never set if the decryption mode is set to DISABLE. This status does not necessarily report the status at the current host position as one or more blocks may have passed through the encryption engine and are awaiting transmission to the host. This bit remains set to one as long as the condition exists regardless of the setting of the RDKM bit in the Automation Encryption Control page.

The encryption parameters over-ridden (EPO) bit at bit 2 of byte 5 may be set to one if the library was the last I_T nexus to set the data encryption parameters with a scope value of ALL I_T NEXUS and an initiator changes this set of data encryption parameters via a primary port. This bit is set to zero when the Encryption Status Log parameter is read.

The encryption parameters lost (EPL) bit at bit 3 of byte 5 may be set to one if the library was the last I_T nexus to set the data encryption parameters with a scope value of ALL I_T NEXUS and the data encryption parameters are cleared due to an event other than processing a Set Data Encryption page. This bit is cleared when the parameter is read.

The encryption parameters attempted over-ride (EPAOR) bit at bit 4 of byte 5 may be set to one if an initiator attempts to send a Set Data Encryption page with a scope value other than GLOBAL while the drive is configured to only allow the library to set the encryption parameters. This bit is cleared when the Encryption Status log parameter is read.

The waiting for encryption key (WFEK) bit at bit 0 of byte 8 may be set to one if the drive has been configured to wait for an encryption key from the library when writing (i.e., the WEK bit is set to one in the Automation Encryption Control pages) and a write command has been received while encryption mode is set to DISABLED. This bit may remain set until: (1) the ADC device server processes a Set Data Encryption page; (2) the ADC device server processes an Automation Encryption Control page with the WEK bit set to zero; or (3) a vendor specific time-out.

The waiting for decryption key (WFDK) bit at bit 1 of byte 8 may be set to one if the drive has been configured to wait for a decryption key from the library when reading (i.e., the WDK bit is set to one in the Automation Encryption Control page) and a read command has caused the drive to encounter an encrypted block while the decryption mode is set to DISABLED or the storage device has the wrong key. This bit may remain set until: (1) the ADC device server processes a Set Data Encryption page; (2) the ADC device server processes an Automation Encryption Control page with the WDK bit set to zero; or (3) a vendor specific time-out.

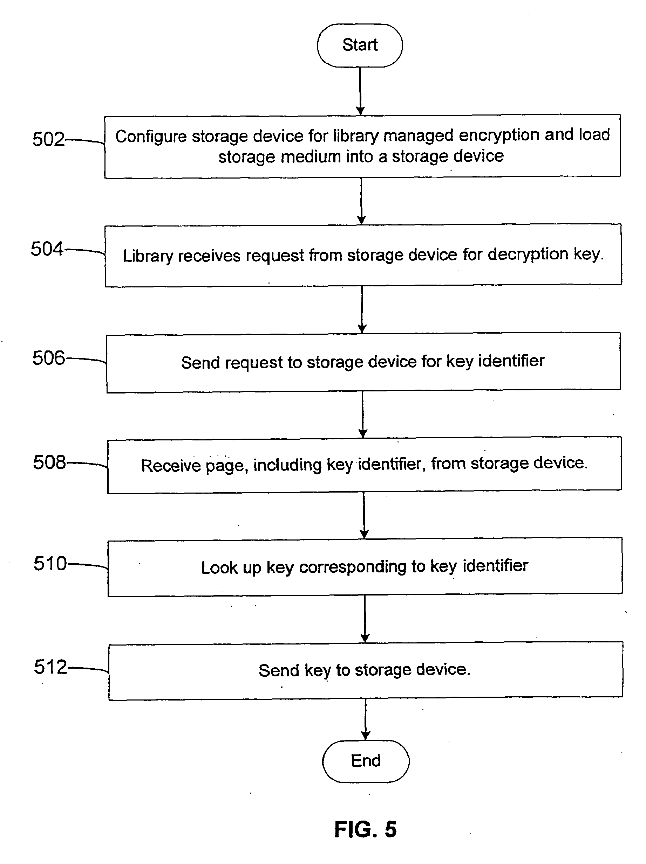

**Figure 5** is an illustrative flow diagram of key management logic for decrypting data in a library in accordance with embodiments of the invention. The process illustrated in **Figure 5** may be executed, for example, by the key manager 116 of **Figure 1**. The process of **Figure 5** may be invoked in response to a communication or request on the library interface for an encryption key, typically received in a data packet (e.g., via the ADI protocol) from a storage device, looks up the key, and returns the key as a result. Block 502 configures the storage device for library managed encryption and causes a storage medium to be loaded into a storage device, e.g., by an automated tape loading system. Block 504 receives, i.e., reads or decodes, a request to look up an encryption key (typically to decrypt data). As noted above, the request is typically received from the storage device. Block 506 sends a request packet to the storage device for a key identifier to be used to look up the key. Alternatively, the key identifier may have been sent in the initial request that was received in block 504, in which case the key identifier would not be requested separately, and block 506 would not be necessary. Block 608 receives a communication, which may be in the form of a page in a packet. The request includes a key identifier. Block 510 looks up the key that corresponds to the key identifier. Block 510 may use a lookup table in the memory of the key manager 116, or on the non-volatile storage accessible by the key manager 116, or some other means of finding the key that was previously associated (e.g., by an administrator 104) with the key identifier. Block 512 sends the key as a response to the device from which the request(s) were received at blocks 504 and 508.

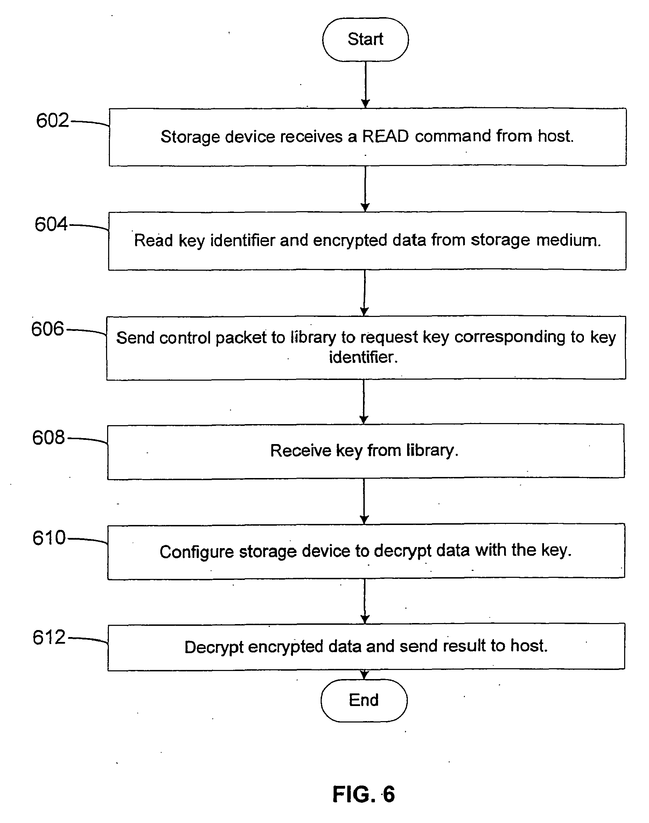

**Figure 6** is an illustrative drawing of decryption logic for decrypting encrypted data stored on a storage device in accordance with embodiments of the invention. The process illustrated in **Figure 6** may be executed, for example, by computer program code executing on a processor in a storage device such as the removable storage device 108 of **Figure 1**. The process may be invoked in response to a request by the host system 102 to read data from the removable storage device 108. At block 602, the storage device receives the read command from the host. At block 604, the storage device reads a key identifier and encrypted data from the storage medium as specified in the read command. Block 606 sends a packet to the key manager 116 via a communication protocol on the library interface (e.g., ADI) to request the key corresponding to the key identifier read in block 604. The key identifier is also sent to the key manager 116, either as part of the packet requesting the key, or in a separate packet. The key manager 116 looks up the encryption key according to, for example, the process of **Figure 5**. Block 608 receives the key from the library via the communication protocol (e.g., ADI). Block 610 configures the storage device to decrypt data with the key by, for example, placing the storage device in a mode in which the device decrypts data as the data is read. At block 612, the storage device decrypts the encrypted data and sends the result to the host via a communication protocol on the host interface (e.g., SCSI or Fibre Channel).

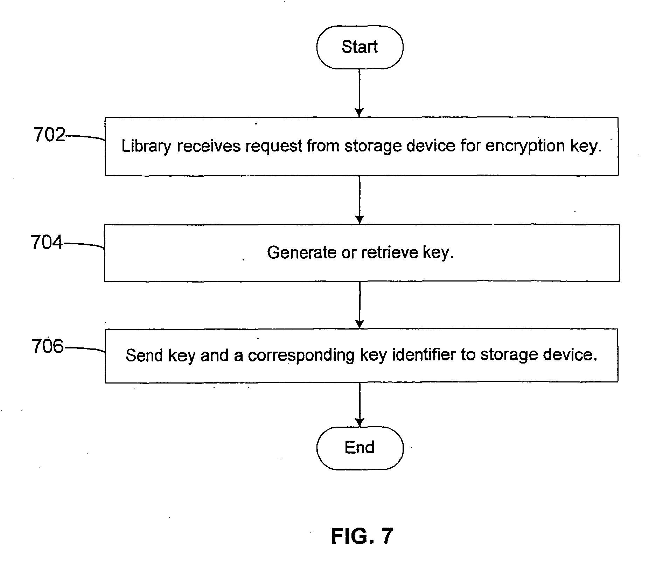

**Figure 7** is an illustrative drawing of key management logic for encrypting data in a library in accordance with embodiments of the invention. The process illustrated in **Figure 7** may be executed, for example, by the key manager 116 of **Figure 1**. The process may be invoked in response to a communication or request on the library interface to generate an encryption key. The communication is typically received in a data packet (e.g., via the ADI protocol) from a storage device. Block 702 receives, i.e., reads or decodes, a request to provide an encryption key for encrypting data. Block 704 generates the encryption key using a technique appropriate for the encryption method, as is known to those knowledgeable in the art of data security. Block 706 sends a response communication that includes the key and the key identifier that corresponds to the key. The response is typically sent to the device from which the request was received in block 702, e.g., a data storage device.

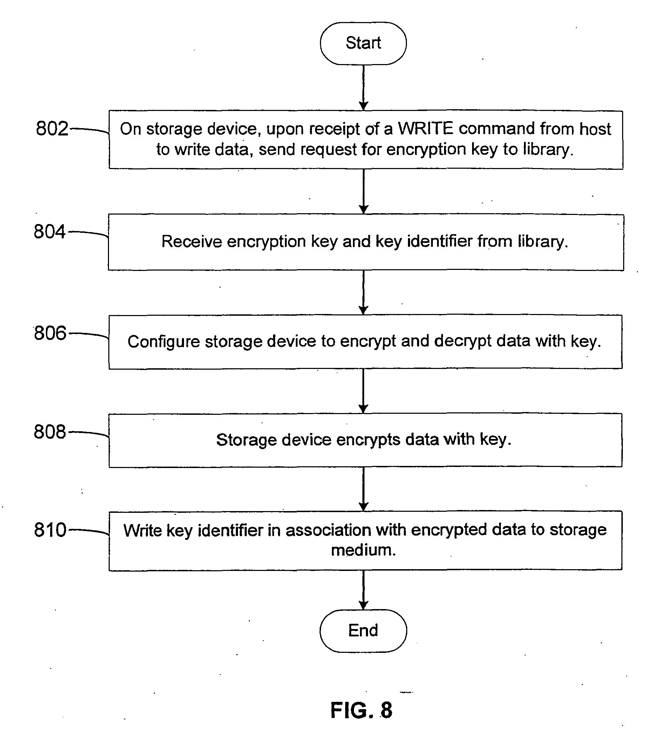

**Figure 8** is an illustrative drawing of encryption logic for encrypting data to be stored on a storage device in accordance with embodiments of the invention. The process illustrated in **Figure 8** may be executed, for example, by computer program code executing on a processor in a storage device such as the removable storage device 108 of **Figure 1**. The process may be invoked in response to a request by the host system 102 to write data to the removable storage device 108. At block 802, the storage device receives the write command from the host 102 and sends a request communication to the key manager 116 to request an encryption key. The key manager 116 generates the encryption key and key identifier according to, for example, the process of **Figure 7**. At block 804, the storage device receives the encryption key and key identifier. Block 806 configures the storage device to encrypt and decrypt, using the key, data written to or read from the storage medium until, for example, the storage medium is ejected or the storage device is disconnected. At block 808, the storage device decrypts encrypts the particular data to be written in the current invocation of the process. At block 810, the storage device writes the key identifier to the storage medium in association with the encrypted data. The association may be established by, for example, writing the key identifier adjacent to the data on the tape. In one example, the key identifier is written to the tape, followed by the encrypted data.

The process of appending an encrypted backup set to an encrypted tape will now be described as an example that illustrates the interaction between the processes of **Figures 5**-**8**. In this example, a tape containing data encrypted with a key from the library is loaded into a drive and then a new backup set is appended at EOD using a different key. In this example, the library first sends a SECURITY PROTOCOL OUT command with the Automation Encryption Control page to the drive, where the new configuration contains the following parameters:
Automation Key Management Control = Library Controlled Encryption.
Report decryption mode mismatch = 1.
Report decryption key mismatch = 1.
Report encryption parameters lost by clearing event = 1.
Wait for key when writing = 1.
Wait for key when reading = 1.

Next, the library sends a SECURITY PROTOCOL OUT command with a Set Data Encryption page to the drive, with the following parameters:
Scope = ALL I_T NEXUS.
Encryption Mode = DISABLE.
Decryption Mode = DISABLE.

Next, the host issues a MOVE MEDIUM command to the library requesting that the tape to be used for the backup be moved into the tape drive. The library then loads the tape into the drive, and the tape drive threads the tape and becomes ready.

Next, the host issues a READ command to the drive to read the tape label. The removable storage device reads the data into cache and discovers the data is encrypted with key labeled "123". The removable storage device sets the decryption mode mismatch (DMM) and waiting for decryption key (WFDK) bits to 1 and sets the RRQST bit in VHF to 1. Next, the library detects the RRQST bit set to one either through polling or AER notification. The library sends a LOG SENSE command for the Requested Recovery log page including the Encryption Status log parameter. The drive returns the Requested Recovery log page Encryption Status log with the decryption mode mismatch (DMM) and waiting for decryption key (WFDK) bits set to 1.

Next, the library sends a SECURITY PROTOCOL IN command requesting the Next Block Encryption Status page. The drive returns the page, which includes a key-associate data descriptor contains an A-KAD descriptor (i.e., key identifier) with the A-KAD data "123". Next, the library looks up the proper key that corresponds to the key identifier, and sends a SECURITY PROTOCOL OUT command with a Set Data Encryption page to the drive, where the command includes the following parameters:
Scope = ALL I_T NEXUS.
Encryption Mode = DISABLE.
Decryption Mode = MIXED.
Algorithm Index = 0.
Key Format = 0.
Key Length = 32
Key = the correct key

In one example, before looking up the key and sending the key to the storage device, the key manager may perform an authorization check to determine if the storage device has permission to access the key. If the authorization check produces a negative result, i.e., the device does not have permission to access the key, then the key manager will send the key to the device. Permission may be established by the backup administrator 104 using the administrator user account, or by any other means of securely defining authorization rules that associate keys with authorized storage devices.

Next, the drive decrypts the data with the key and returns it to the host. The drive continues to pre-process blocks using the current key. The host issues a SPACE command to End of Data (EOD) (to prepare to append the next backup set). The host issues a SPACE reverse 2 filemarks command (to validate the catalog for the last backup set). The host issues a SPACE forward 1 filemark command. The host issues READ commands to validate the last catalog. Since these blocks have been encrypted with the same key as the header, the drive processes them normally. The host issues READ commands until the filemark just before EOD s reported.

The host then issues a WRITE command to start the next backup. The drive sets the waiting for encryption key (WFEK) bit to one and the RRQST bit in the VHF data to 1 in a packet sent to the library. The library receives the packet and detects the RRQST bit set to one either through polling or AER notification. The library sends a LOG SENSE command for the Requested Recovery page including the Encryption Status log parameter in a packet sent to the drive. The drive returns the Requested Recovery page with the Encryption Status log parameter with the waiting for encryption key (WFEK) bit set to 1.

Next, the library sends a SECURITY PROTOCOL OUT command with a Set Data Encryption page in a packet to the drive, where the page includes the following parameters:
Scope = ALL I_T NEXUS.
Encryption Mode = ENCRYPT.
Decryption Mode = MIXED.
Algorithm Index = 0.
Key Format = 0.
Key Length = 32
Key = the new key.
Key-Associated Data Descriptors includes an A-KAD descriptor with the Key ID for the new key.

The drive then accepts the data for the WRITE commands and subsequent WRITE commands and encrypts the data with the supplied key. When the backup is complete, the host issues a SPACE reverse command or LOCATE command to reposition to the beginning of the back set for the verify pass. The host then issues READ commands to verify the data. Since the drive was configured to decrypt with the same key, the READ commands are processed normally. The host issues a LOAD UNLOAD command to the drive to unload the tape or storage medium. The drive then unloads the tape or storage medium. While processing the unload operation, the key may be cleared due to the CKOD bit being set. The drive sets the encryption parameters lost (EPL) bit to 1 and the RRQST bit in the VHF data to 1.

The library then detects the RRQST bit set to 1 either through polling or AER notification. The library sends a LOG SENSE command for the Requested Recovery log page including the Encryption Status log parameter. The tape drive returns the Requested Recovery log page with the Encryption Status log parameter with the encryption parameters lost (EPL) bit set to 1. The library does nothing in response. Once the tape drive or storage device sends completion status for the LOAD UNLOAD to the host, the host issues a MOVE MEDIUM command to the library. The library processes the MOVE MEDIUM command to return the tape to a slot.

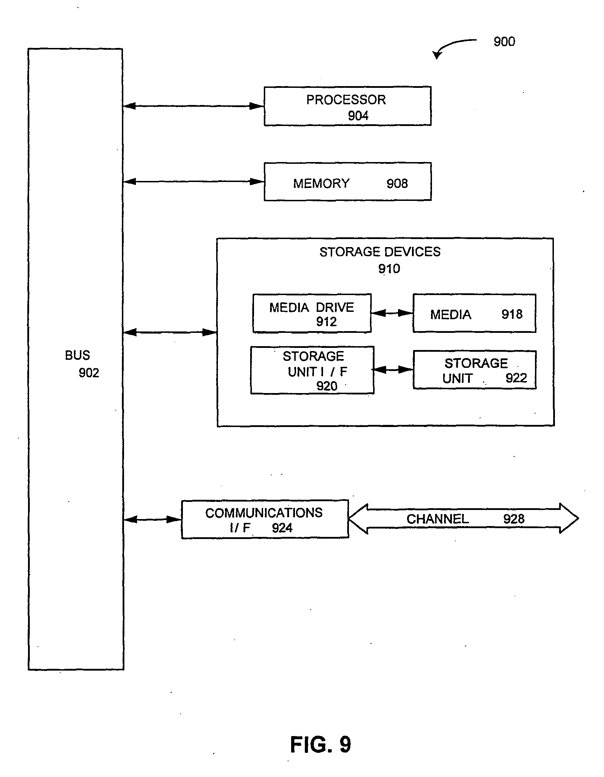

**Figure 9** is an illustrative drawing of an exemplary computer system that may be used in accordance with some embodiments of the invention. **Figure 9** illustrates a typical computing system 900 that may be employed to implement processing functionality in embodiments of the invention. Computing systems of this type may be used in clients and servers, for example. Those skilled in the relevant art will also recognize how to implement the invention using other computer systems or architectures. Computing system 900 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 900 can include one or more processors, such as a processor 904. Processor 904 can be implemented using a general or special purpose processing engine such as, for example, a microprocessor, microcontroller or other control logic. In this example, processor 904 is connected to a bus 902 or other communication medium.

Computing system 900 can also include a main memory 908, such as random access memory (RAM) or other dynamic memory, for storing information and instructions to be executed by processor 904. Main memory 908 also may be used for storing temporary variables or other intermediate information during execution of instructions to be executed by processor 904. Computing system 900 may likewise include a read only memory ("ROM") or other static storage device coupled to bus 902 for storing static information and instructions for processor 904.

The computing system 900 may also include information storage system 910, which may include, for example, a media drive 912 and a removable storage interface 920. The media drive 912 may include a drive or other mechanism to support fixed or removable storage media, such as a hard disk drive, a floppy disk drive, a magnetic removable storage device, an optical disk drive, a CD or DVD drive (R or RW), or other removable or fixed media drive. Storage media 918, may include, for example, a hard disk, floppy disk, magnetic tape, optical disk, CD or DVD, or other fixed or removable medium that is read by and written to by media drive 914. As these examples illustrate, the storage media 918 may include a computer-readable storage medium having stored therein particular computer software or data.

In alternative embodiments, information storage system 910 may include other similar components for allowing computer programs or other instructions or data to be loaded into computing system 900. Such components may include, for example, a removable storage unit 922 and an interface 920, such as a program cartridge and cartridge interface, a removable memory (for example, a flash memory or other removable memory module) and memory slot, and other removable storage units 922 and interfaces 920 that allow software and data to be transferred from the removable storage unit 918 to computing system 900.

Computing system 900 can also include a communications interface 924. Communications interface 924 can be used to allow software and data to be transferred between computing system 900 and external devices. Examples of communications interface 924 can include a modem, a network interface (such as an Ethernet or other NIC card), a communications port (such as for example, a USB port), a PCMCIA slot and card, etc. Software and data transferred via communications interface 924 are in the form of signals which can be electronic, electromagnetic, optical or other signals capable of being received by communications interface 924. These signals are provided to communications interface 924 via a channel 928. This channel 928 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms "computer program product," "computer-readable medium" and the like may be used generally to refer to media such as, for example, memory 908, storage device 918, or storage unit 922. These and other forms of computer-readable media may be involved in storing one or more instructions for use by processor 904, to cause the processor to perform specified operations. Such instructions, generally referred to as "computer program code" (which may be grouped in the form of computer programs or other groupings), when executed, enable the computing system 900 to perform features or functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 900 using, for example, removable storage drive 914, drive 912 or communications interface 924. The control logic (in this example, software instructions or computer program code), when executed by the processor 904, causes the processor 904 to perform the functions of the invention as described herein.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. Rather, the scope of the present invention is limited only by the claims. Additionally, although a feature may appear to be described in connection with particular embodiments, one skilled in the art would recognize that various features of the described embodiments may be combined in accordance with the invention.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

Moreover, it will be appreciated that various modifications and alterations may be made by those skilled in the art without departing from the spirit and scope of the invention. The invention is not to be limited by the foregoing illustrative details, but is to be defined according to the claims.

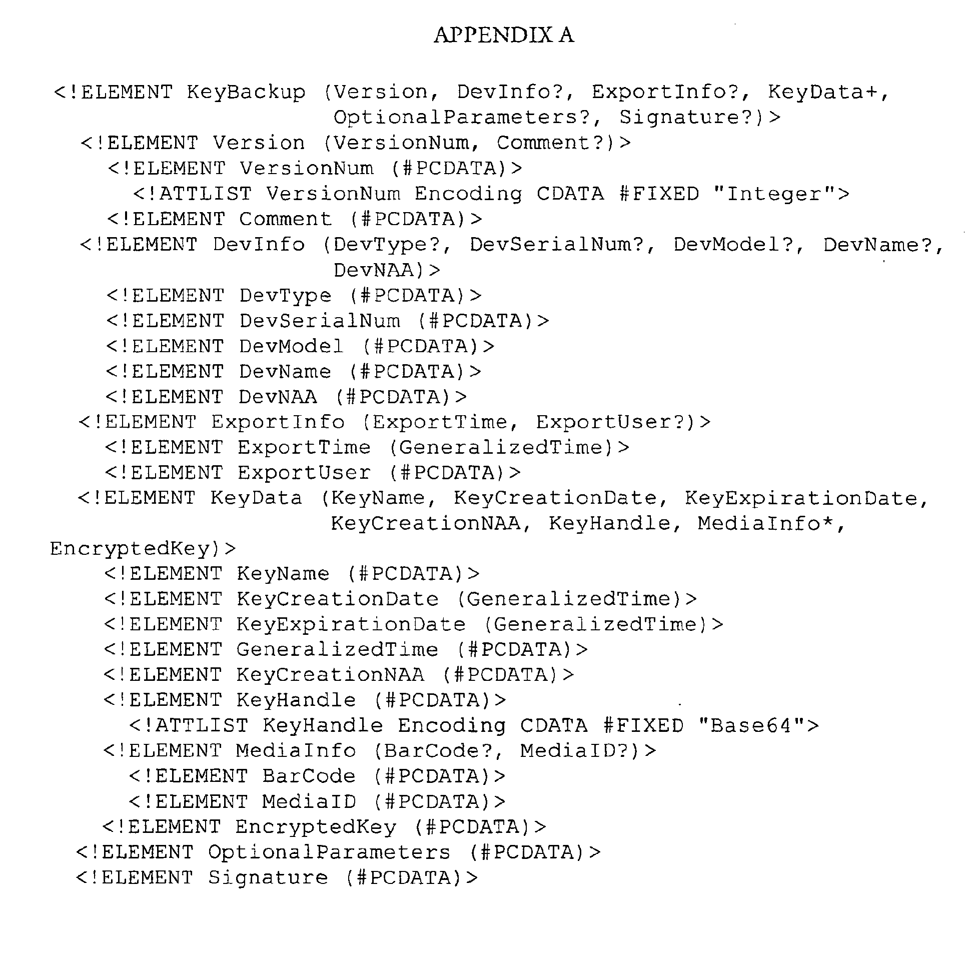

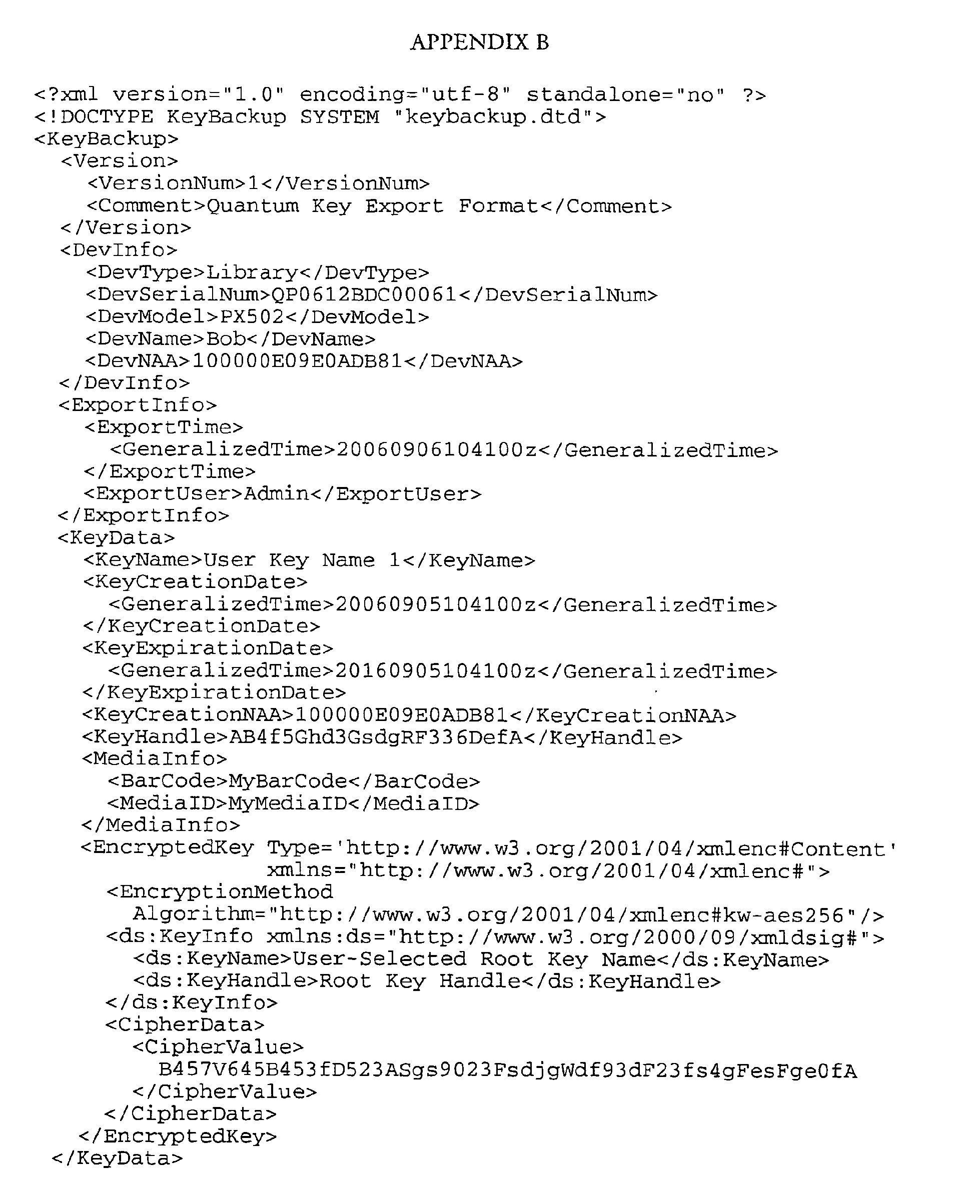

## Claims

1. A storage medium, comprising:
a magnetically encoded key identifier for identifying an encryption key, the key identifier comprising:
a device identifier that identifies the origin of the key;
a timestamp; and
a key nonce.

2. The storage medium of claim 1, wherein the timestamp represents the time at which the encryption key was created.

3. The storage medium of claim 1, wherein the timestamp represents the time at which the encryption key was made available.

4. The storage medium of claim 1, wherein the key nonce is based upon a pseudo-random value.

5. The storage medium of claim 1, wherein the storage medium comprises magnetic tape, magnetic disk, optical storage, or a combination thereof.

6. The storage medium of claim 1, wherein the key nonce is based on random number created by a physical entropy source.

7. The storage medium of claim 1, wherein the key nonce comprises a unique number within the domain of a storage device associated with the key.

8. Apparatus for encoding a key identifier on a magnetic tape, the apparatus comprising:
logic for causing a device identifier to be magnetically encoded on the tape;
logic for causing a timestamp to be magnetically encoded on the tape; and
logic for causing a key nonce to be magnetically encoded on the tape.

9. Key manager apparatus for providing a decryption key, the apparatus comprising:
logic for requesting from a storage device a key identifier that identifies a received decryption key;
logic for causing the retrieval of an entry from a table of at least one encryption key, wherein the entry is associated with a key identifier received from the storage device, and the entry specifies the decryption key that corresponds to the encrypted data; and
logic for causing the decryption key to be communicated to the storage device.

10. A data storage library comprising the apparatus of claim 9.

11. A data storage device operable to decrypt encrypted data stored on a storage device, the storage device comprising:
logic for detecting the encrypted data and a key identifier associated with the encrypted data stored on the storage device;
logic for causing a request for a decryption key to be communicated to a data storage library, wherein the request includes the key identifier;
logic for causing decryption of the encrypted data block with a received decryption key to produce decrypted data.

12. The data storage device of claim 11, further comprising:
logic for configuring the storage device to use the decryption key to decrypt data associated with the key identifier; and
logic for causing the decrypted data to be communicated to a host.

13. The data storage device of claim 11, wherein the data storage device comprises a magnetic tape drive, a magnetic disk drive, an optical disk drive, or a combination thereof.

14. Key manager apparatus for providing an encryption key, comprising:
logic for generating an encryption key and an associated key identifier in response to receiving a request for an encryption key; and
logic for causing the encryption key and the associated key identifier to be communicated to the storage device.

15. A data storage library comprising the apparatus of claim 14.

16. A data storage device operable to encrypt data to be stored on the storage device, the storage device comprising:
logic for causing a request for an encryption key to be communicated to a data storage library in response to receiving a write data command;
logic for configuring the storage device to encrypt and decrypt data with an encryption key received from the library;
logic for causing encryption of the data with the encryption key; and
logic for writing the data and a key identifier associated with the encryption key to the storage device, wherein the key identifier is received from the library, and the key identifier is stored in association with the data.

17. The data storage device of claim 16, wherein the data storage device comprises a magnetic tape drive, a magnetic disk drive, an optical disk drive, or a combination thereof.

18. Key export apparatus for generating a tree-structured representation of an encryption key, the apparatus comprising:
logic for generating at least one key data tree element, wherein the key data tree element includes a key name and an encrypted representation of the encryption key.

19. The apparatus of claim 18, wherein the tree-structured representation comprises an XML representation.

20. The apparatus of claim 18, wherein the key data tree element includes a key creation date, a key expiration date, a key creation name, address, and authority identifier, a key handle, or a combination thereof.
